# EUROPEAN PATENT APPLICATION

(11) **EP 4 674 755 A1**
(43) Date of publication of application: **07.01.2026**
(21) Application number: 25186709.9
(22) Date of filing: 01.07.2025
(51) Int. Cl.: B64D 11/00

(54) **PORTABLE, MULTIPURPOSE PASSENGER CONTROL UNIT**

(30) Priority: 03.07.2024 IN 202441051061; 29.04.2025 US 202519193111
(71) Applicant: B/E Aerospace, Inc., Winston-Salem, NC 27105 (US)
(72) Inventor: JOHANNESSEN, Eric, Holbrook, NY (US); KODATI, Sambasiva Rao, Hyderabad (IN); GUNTAPATI, Mallikarjuna Reddy, Hyderabad (IN); KOTTAKAPU, Prakash Reddy, Karnataka (IN)
(74) Representative: Dehns

(57) **Abstract**

An electronic equipment control system is provided. The electronic equipment control system includes a portable, multipurpose passenger control unit (202), The portable, multipurpose passenger control includes a portable passenger control unit (304) and a fixed base (302). The portable passenger control unit (304) comprises a base portion (320). The fixed base (302) comprises a holder (312) configured to receive the base portion (320). Responsive to the portable passenger control unit (304) being coupled to the holder (312), the portable passenger control unit (304) is configured to control one or more electronic devices within a suite.

## Description

### CROSS-REFERENCE TO RELATED APPLICATIONS

This application claims priority to, and the benefit of, India Patent Application No. 202441051061, filed July 3, 2024 (DAS Code 9F0F) and titled "PORTABLE, MULTIPURPOSE PASSENGER CONTROL UNIT".

### FIELD

The present disclosure generally relates to control systems and more particularly to a portable, multipurpose passenger control unit for use within a luxury or comfort suite on an aircraft or in a lounge within an airport.

### BACKGROUND

In luxury or comfort suites on an aircraft or similar suites in a lounge within an airport, a passenger may have to extend their arms or leave their seats to control various electronic equipment, such as lights, seat positions, temperature, or entertainment systems, among others. Having to reach or leave their seats to control such electronic equipment may be inconvenient for some passengers and difficult or impossible for persons with reduced mobility.

### SUMMARY

Disclosed herein is an electronic equipment control system. The electronic equipment control system includes a portable, multipurpose passenger control unit. The portable, multipurpose passenger control unit includes a portable passenger control unit and a fixed base. The portable passenger control unit includes a base portion. The fixed based includes a holder configured to receive the base portion. Responsive to the portable passenger control unit being coupled to the holder, the portable passenger control unit is configured to control one or more electronic devices within a suite.

In various embodiments, the fixed base further comprises a locking mechanism. In various embodiments, the locking mechanism is configured to lock the portable passenger control unit in the fixed based when placed in the holder.

In various embodiments, the fixed base further comprises a projector configured for projecting images onto a surface.

In various embodiments, the one or more electronic devices are at least one of a light, a seat, a temperature control system, a flight attendant call system, an in-flight entertainment system, or a projector within the suite.

In various embodiments, the portable, multipurpose passenger control unit is at least one of electronically or communicatively coupled to an electrical system or a communication system in order to control the one or more electronic devices within the suite.

In various embodiments, the fixed base includes a mounting plate that is configured to mechanically mount to a surface within the suite and a base that is configured to fixedly coupled to the mounting plate.

In various embodiments, responsive to the portable passenger control unit being coupled to the holder, the portable passenger control unit is configured to be electrically charged via the holder. In various embodiments, responsive to the portable passenger control unit being removed from the holder, the portable passenger control unit is configured to provide an alert indicating that the portable passenger control unit is no longer being charged.

In various embodiments, the portable passenger control unit further comprises a control ring that is configured to be manually rotated by a passenger in order to select an action to be performed, the action being to control one or more of the one or more electronic devices within the suite.

In various embodiments, the portable passenger control unit further comprises a display that is configured to display one or more actions for controlling one or more of the one or more electronic devices within the suite. In various embodiments, the control ring is configured to select between the one or more actions using the display.

In various embodiments, the portable passenger control unit further comprises an audio sensor configured to receive an audible command for controlling one or more of the one or more electronic devices within the suite.

Also disclosed herein is an aircraft. The aircraft includes a suite and an electronic equipment control system deployed within the suite. The electronic equipment control system includes a portable, multipurpose passenger control unit. The portable, multipurpose passenger control unit includes a portable passenger control unit and a fixed base. The portable passenger control unit includes a base portion. The fixed based includes a holder configured to receive the base portion. Responsive to the portable passenger control unit being coupled to the holder, the portable passenger control unit is configured to control one or more electronic devices within a suite.

In various embodiments, the fixed base further comprises a locking mechanism. In various embodiments, the locking mechanism is configured to lock the portable passenger control unit in the fixed based when placed in the holder.

In various embodiments, the fixed base further comprises a projector configured for projecting images onto a surface.

In various embodiments, the one or more electronic devices are at least one of a light, a seat, a temperature control system, a flight attendant call system, an in-flight entertainment system, or a projector within the suite.

In various embodiments, the portable, multipurpose passenger control unit is at least one of electronically or communicatively coupled to an electrical system or a communication system in order to control the one or more electronic devices within the suite.

In various embodiments, the fixed base includes a mounting plate that is configured to mechanically mount to a surface within the suite and a base that is configured to fixedly coupled to the mounting plate.

In various embodiments, responsive to the portable passenger control unit being coupled to the holder, the portable passenger control unit is configured to be electrically charged via the holder. In various embodiments, responsive to the portable passenger control unit being removed from the holder, the portable passenger control unit is configured to provide an alert indicating that the portable passenger control unit is no longer being charged.

In various embodiments, the portable passenger control unit further comprises a control ring that is configured to be manually rotated by a passenger in order to select an action to be performed, the action being to control one or more of the one or more electronic devices within the suite.

In various embodiments, the portable passenger control unit further comprises a display that is configured to display one or more actions for controlling one or more of the one or more electronic devices within the suite. In various embodiments, the control ring is configured to select between the one or more actions using the display.

In various embodiments, the portable passenger control unit further comprises an audio sensor configured to receive an audible command for controlling one or more of the one or more electronic devices within the suite.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates a suite, in accordance with various embodiments.
FIG. 2 illustrates a view from inside suite, in accordance with various embodiments.
FIG. 3 illustrates a portable, multipurpose passenger control unit (PMPPCU), in accordance with various embodiments.
FIG. 4 illustrates a portable, multipurpose passenger control unit (PMPPCU) displaying an image via a projector, in accordance with various embodiments.
FIGS. 5A, 5B, 5C, and 5D illustrate isometric and top views of various examples of the options available to a passenger shown via a display of a portable, multipurpose passenger control unit (PMPPCU), in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. While these exemplary embodiments are described in sufficient detail to enable those skilled in the art to practice the invention, it should be understood that other embodiments may be realized and that logical, chemical and mechanical changes may be made without departing from the spirit and scope of the invention. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Disclosed herein are systems for automatically controlling various electronic equipment, such as lights, seat positions, temperature, flight attendant call, or entertainment systems, among others, via a portable, multipurpose passenger control unit (PMPPCU). In various embodiments, the PMPPCU may be in a luxury or comfort suites on an aircraft, as described below, or in similar suites in a lounge within an airport, without departing from the spirit and scope of the disclosure. In various embodiments, without departing from the spirit and scope of the disclosure, the PMPPCU may be in a luxury or comfort suite of a train or a ship, among other vehicles. In various embodiments, the PMPPCU may include two main components: a fixed base and a portable passenger control unit (PCU). In various embodiments, the PCU is a device that is owned by the passenger such that passenger may take the PCU from aircraft to aircraft or aircraft to lounge. In various embodiments, the fixed base includes a holder for holding and/or charging the portable PCU, a locking mechanism to lock the portable PCU when placed in the holder and to unlock the portable PCU from the holder, a projector for projecting images onto a surface, such as a forward wall, an aft wall, an exterior wall, an interior wall, or a window, and an illuminating light that is configured to light when certain actions are performed. In various embodiments, the portable PCU is configured with electronic circuitry to connect to the fixed base and electrically and/or communicatively interface with various other services within the aircraft, such as a power system, IEEE 802.11 interface (Wi-Fi), an IEEE 802.3 interface (ethernet), an IEEE 802.15.1 interface (Bluetooth), and/or an IEEE 802.15.4 interface (ZigBee), among others. In that regard, in various embodiments, the fixed base is configured to charge the portable PCU responsive to the portable PCU being placed into the holder. In various embodiments, the fixed base may be electrically and/or communicatively connected to a power system as well as other control systems such as those to control the lights, seat positions, temperature, flight attendant call, or entertainment systems, among others. In various embodiments, the portable PCU may include a digital display that is configured to display suite controls, such as lights, seat controls, temperature, flight attendant call, or entertainment systems. In that regard, the portable PCU may be touch and/or voice activated. In various embodiments, the portable PCU may be configured to, responsive to being removed from the base, provide an alert, such as audible or visible alert.

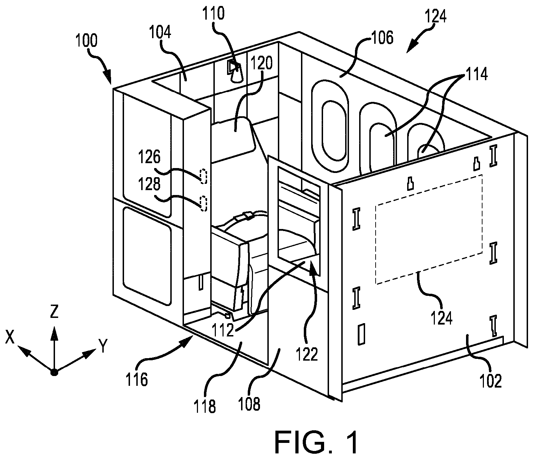

Referring now to FIG. 1, in accordance with various embodiments, a suite 100 is illustrated. In various embodiments, the suite 100 may include a forward wall 102, an aft wall 104, an exterior wall 106, an interior wall 108, a light 110, a surface 112, one or more windows 114 disposed in exterior wall 106, a doorway 116 disposed in interior wall 108, a floor 118, and a seat 120. In various embodiments, suite 100 may further include an interior window 122 in interior wall 108. In various embodiments, the suite 100 may further include an in-flight entertainment (IFE) system 124, a temperature control system 126, and/or a flight attendant call system 128 located in the suite 100.

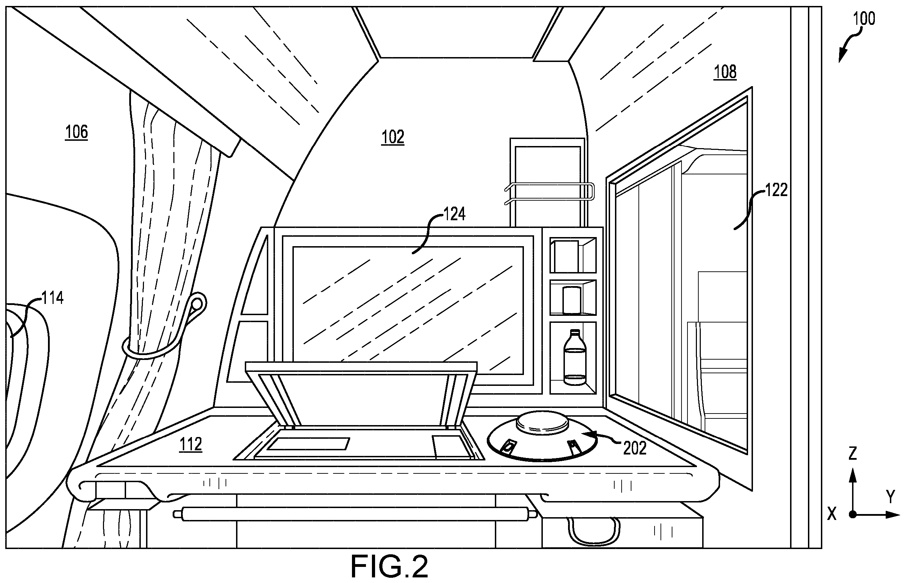

Referring now to FIG. 2, in accordance with various embodiments, a view from inside suite 100 is illustrated. With reference to the components of suite 100 described in FIG. 1, the view illustrated in FIG. 2 depicts that the suite 100 may include the forward wall 102, an exterior wall 106, an interior wall 108, a surface 112, one or more windows 114 disposed in exterior wall 106, an interior window 122 in interior wall 108, and the IFE system 124. Additionally, in various embodiments, the suite 100 may include portable, multipurpose passenger control unit (PMPPCU) 202. In various embodiments, the PMPPCU 202 is configured to automatically control, under command of a passenger, various electronic equipment, such as controlling the light 110, positioning of the seat 120, setting a temperature of the suite 100 via the temperature control system 126, and/or calling for a flight attendant via the flight attendant call system 128 of FIG. 1, and/or controlling the IFE system 124 of FIGS. 1 and 2. In that regard, in various embodiments, the PMPPCU 202 is configured with electronic circuitry to connect to the fixed base and electrically and/or communicatively interface with various other services within the aircraft, such as a power system, IEEE 802.11 interface (Wi-Fi), an IEEE 802.3 interface (ethernet), an IEEE 802.15.1 interface (Bluetooth), and/or an IEEE 802.15.4 interface (ZigBee), among others. In various embodiments, by electrically and/or communicatively interfacing with various other services within the aircraft, the PMPPCU 202, when commanded by a passenger, may be able to control the lights, position of the seat, a temperature of the suite, call for a flight attendant, and/or the entertainment system, among others.

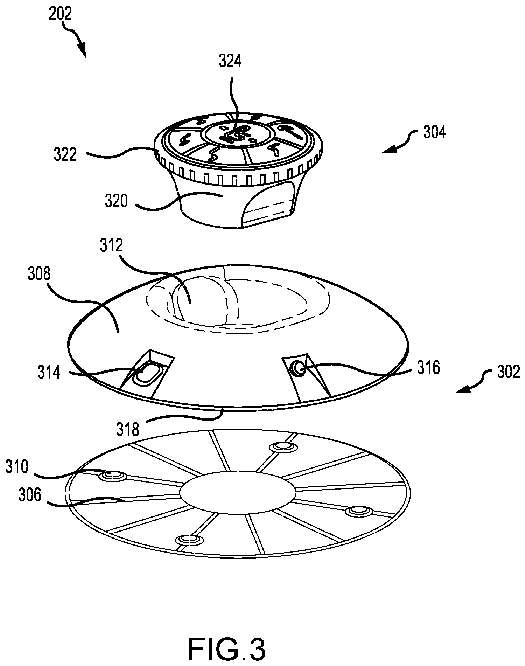

Referring now to FIG. 3, in accordance with various embodiments, a portable, multipurpose passenger control unit (PMPPCU) is illustrated. In various embodiments, the PMPPCU 202 includes two main components: a fixed base 302 and a portable passenger control unit (PCU) 304. In various embodiments, the fixed base 302 includes a mounting plate 306 and a base 308. In various embodiments, the mounting plate 306 includes mounting holes 310 for mechanically mounting the mounting plate 306 to a surface, such as surface 112 or an inwardly, i.e. within the suite 100, facing side of interior wall 108, among other locations. In various embodiments, the base 308 is configured to fixedly couple to the mounting plate 306 so that the base 308 does not detach from the mounting plate 306 during an in-flight event, such as turbulence or aircraft maneuvers, among others. In various embodiments, the base 308 includes a holder 312 configured to hold and/or charge the portable PCU 304, a locking mechanism 314 configured to lock the portable PCU 304 in response to being placed in the holder 312 and to unlock the portable PCU 304 from the holder 312, a projector 316 configured for projecting images onto a surface, such as the forward wall 102, the aft wall 104, the exterior wall 106, the interior wall 108, or the interior window 122, and an illuminating light 318 that is configured to light in response to certain actions being performed.

In various embodiments, the portable PCU 304 includes a base portion 320 that is configured to fit within the holder 312 of the fixed base 302. In various embodiments, the base portion includes one or more mechanisms, such as electrical contacts, that electrically and/or communicatively interface with one or more mechanisms in the holder 312, such as electrical contacts, so that the portable PCU 304 may connect to the fixed base and electrically and/or communicatively interface with various other services within the aircraft, such as a power system, IEEE 802.11 interface (Wi-Fi), an IEEE 802.3 interface (ethernet), an IEEE 802.15.1 interface (Bluetooth), and/or an IEEE 802.15.4 interface (ZigBee), among others. In that regard, in various embodiments, the fixed base 302 is configured to charge the portable PCU 304 in response to the portable PCU 304 being placed into the holder 312. In various embodiments, the portable PCU 304 further includes a control ring 322 that is configured to be manually rotated by the passenger and select a specific action to be performed, such as such as controlling the light 110, positioning the seat 120, setting a temperature of the suite 100 via the temperature control system 126, calling for a flight attendant via the flight attendant call system 128, controlling the IFE system 124, or projecting an image onto a surface via the projector 316.

In various embodiments, the portable PCU 304 further includes a display 324. In various embodiments, the display 324 is configured to indicate one or more actions available to the passenger within the suite 100. Again, in various embodiments, the options may be controlling the light 110, positioning the seat 120, setting a temperature of the suite 100 via the temperature control system 126, calling for a flight attendant via the flight attendant call system 128, controlling the IFE system 124, or projecting an image onto a surface via the projector 316. In various embodiments, the portable PCU 304 may further include one or more audio sensors. In various embodiments, the one or mor audio sensors allow the portable PCU 304 to be voice activated and thus, allow the passenger to select one or more options of the available options, i.e. controlling the light 110, positioning the seat 120, setting a temperature of the suite 100 via the temperature control system 126, calling for a flight attendant via the flight attendant call system 128, controlling the IFE system 124, or projecting an image onto a surface via the projector 316. In various embodiments, the display 324 may be an interactive display that is configured to allow the passenger to select options by pressing on the display 324. In various embodiments, the portable PCU 304 may be also configured to provide an alert, such as audible or visible alert, in response to the portable PCU 304 being removed from the base 308. That is, the user may remove the portable PCU 304 from the base 308 when the user may be out of reach of the portable PCU 304 locked the base 308, such as when reclined or sleeping. In that regard, in various embodiments, if the portable PCU 304 is removed from the base 308 and is no longer being charged, then the portable PCU 304 may be also configured to provide an alert notifying the user that the portable PCU 304 is no longer being charged.

In that regard, in various embodiments, the base 308 and the portable PCU 304 may comprise one or more processors configured to implement various logical operations in response to execution of instructions, for example, instructions stored on a non-transitory, tangible, computer-readable medium. The one or more processors can be a general-purpose processor, a microprocessor, a microcontroller, a digital signal processor (DSP), an application specific integrated circuit (ASIC), a field programmable gate array (FPGA) or other programmable logic device, discrete or transistor logic, discrete hardware components, or any combination thereof. The controller may further comprise memory to store data, executable instructions, system program instructions, and/or controller instructions to implement the control logic of the controller.

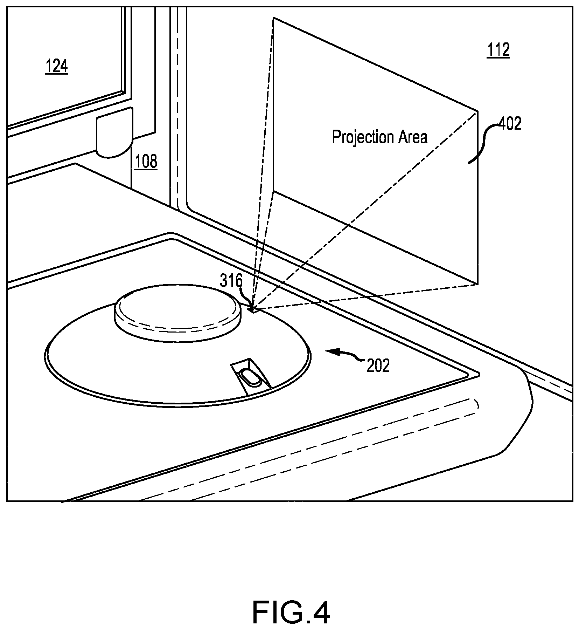

Referring now to FIG. 4, in accordance with various embodiments, a portable, multipurpose passenger control unit (PMPPCU) displaying an image via a projector is illustrated. In various embodiments, the PMPPCU 202 include projector 316 for projecting images onto a surface, such as, for example, the interior window 122 of the interior wall 108. In various embodiments, the projector 316 of the PMPPCU 202 is configured to project the image onto a projection area 402 the interior window 122. In various embodiments, projecting the image via the projector 316 provides an alternative to using the IFE system 124, which may extend the life of the IFE system 124 and thereby improve sustainability.

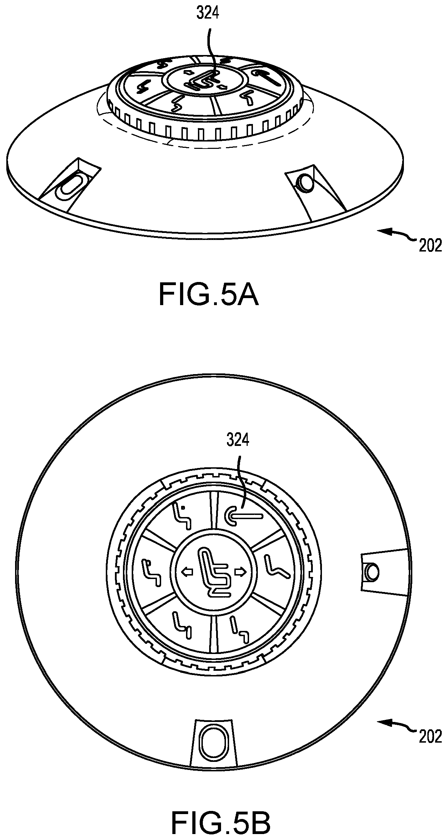

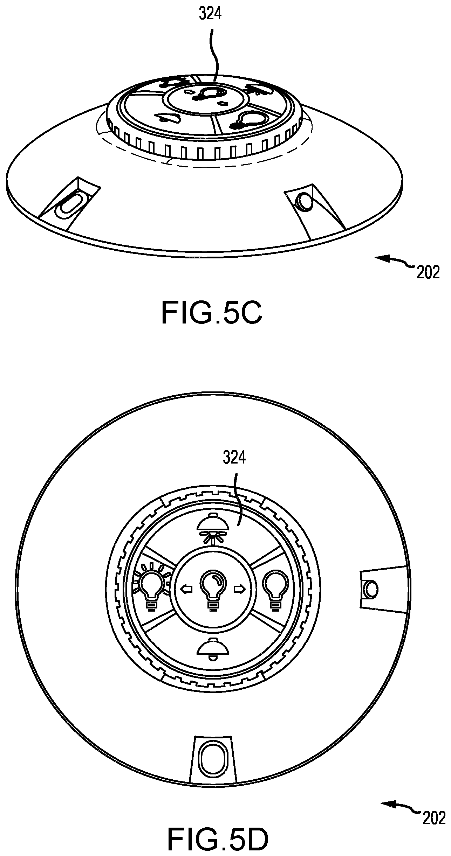

Referring now to FIGS. 5A, 5B, 5C, and 5D, in accordance with various embodiments, isometric and top views of various examples of the options available to a passenger shown via a display of a portable, multipurpose passenger control unit (PMPPCU) are illustrated. In various embodiments, FIG. 5A depicts options available via the display 324 of the PMPPCU 202 with regard to seat 120. In various embodiments, positions of the seat 120 may include a lounge position, a seated position, a reclining position, or a sleeping position, among others. In various embodiments, FIG. 5A depicts options available with regard to light 110. In various embodiments, settings for the light 110 seat may include on, off, bright, or dim, among others.

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals *per se.*

For example, the steps recited in any of the method or process descriptions may be executed in any order and are not limited to the order presented. Moreover, any of the functions or steps may be outsourced to or performed by one or more third parties. Modifications, additions, or omissions may be made to the systems, apparatuses, and methods described herein without departing from the scope of the disclosure. For example, the components of the systems and apparatuses may be integrated or separated. An individual component may be comprised of two or more smaller components that may provide a similar functionality as the individual component. Moreover, the operations of the systems and apparatuses disclosed herein may be performed by more, fewer, or other components and the methods described may include more, fewer, or other steps. Additionally, steps may be performed in any suitable order. As used in this document, "each" refers to each member of a set or each member of a subset of a set.

Furthermore, any reference to singular includes plural embodiments, and any reference to more than one component may include a singular embodiment. Use of 'a' or 'an' before a noun naming an object shall indicate that the phrase be construed to mean 'one or more' unless the context sufficiently indicates otherwise. For example, the description or claims may refer to a processor for convenience, but the invention and claim scope contemplates that the processor may be multiple processors. The multiple processors may handle separate tasks or combine to handle certain tasks. Although specific advantages have been enumerated herein, various embodiments may include some, none, or all of the enumerated advantages. A "processor" may include hardware that runs the computer program code. Specifically, the term 'processor' may be synonymous with terms like controller and computer and should be understood to encompass not only computers having different architectures such as single/multiprocessor architectures and sequential (Von Neumann) / parallel architectures but also specialized circuits such as field-programmable gate arrays (FPGA), application specific circuits (ASIC), signal processing devices and other devices.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 5% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 5% of a stated amount or value.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. An electronic equipment control system, comprising:
a portable, multipurpose passenger control unit (202), the portable, multipurpose passenger control unit (202) comprising:
a portable passenger control unit (304); and
a fixed base (302),
wherein the portable passenger control unit (304) comprises a base portion (320),
wherein the fixed base (302) comprises a holder (312) configured to receive the base portion (320), and
wherein, responsive to the portable passenger control unit (304) being coupled to the holder (312), the portable passenger control unit (304) is configured to control one or more electronic devices within a suite.

2. The electronic equipment control system of claim 1, wherein the fixed base (302) further comprises a locking mechanism (314) and wherein the locking mechanism (314) is configured to lock the portable passenger control unit (304) in the fixed base (302) when placed in the holder (312).

3. The electronic equipment control system of claim 1 or 2, wherein the fixed base (302) further comprises a projector (316) configured for projecting images onto a surface.

4. The electronic equipment control system of any preceding claim, wherein the one or more electronic devices are at least one of a light, a seat, a temperature control system, a flight attendant call system, an in-flight entertainment system, or a projector within the suite.

5. The electronic equipment control system of any preceding claim, wherein the portable, multipurpose passenger control unit (202) is at least one of electronically or communicatively coupled to an electrical system or a communication system in order to control the one or more electronic devices within the suite.

6. The electronic equipment control system of any preceding claim, wherein the fixed base (302) comprises:
a mounting plate (306) that is configured to mechanically mount to a surface within the suite; and
a base (308) that is configured to fixedly coupled to the mounting plate.

7. The electronic equipment control system of any preceding claim, wherein, responsive to the portable passenger control unit (304) being coupled to the holder (312), the portable passenger control unit (304) is configured to be electrically charged via the holder (312) and wherein, responsive to the portable passenger control unit (304) being removed from the holder (312), the portable passenger control unit (304) is configured to provide an alert indicating that the portable passenger control unit (304) is no longer being charged.

8. The electronic equipment control system of any preceding claim, wherein the portable passenger control unit (304) further comprises a control ring (322) that is configured to be manually rotated by a passenger in order to select an action to be performed, the action being to control one or more of the one or more electronic devices within the suite.

9. The electronic equipment control system of claim 8, wherein the portable passenger control unit (304) further comprises a display (324) that is configured to display one or more actions for controlling one or more of the one or more electronic devices within the suite and wherein the control ring (322) is configured to select between the one or more actions using the display (324).

10. The electronic equipment control system of any preceding claim, wherein the portable passenger control unit (304) further comprises an audio sensor configured to receive an audible command for controlling one or more of the one or more electronic devices within the suite.

11. An aircraft, the aircraft comprising:
a suite; and
an electronic equipment control system, as claimed in any preceding claim, deployed within the suite.
